# EUROPÄISCHE PATENTANMELDUNG

(11) **EP 4 012 329 A1**
(43) Veröffentlichungstag der Anmeldung: **15.06.2022**
(21) Anmeldenummer: 21214210.3
(22) Anmeldetag: 13.12.2021
(51) Int. Cl.: G01B 11/24

(54) **VERFAHREN UND VORRICHTUNG ZUR OPTISCHEN VERZAHNUNGSMESSUNG**

(30) Priorität: 14.12.2020 DE 102020133309
(71) Anmelder: Klingelnberg GmbH, 42499 Hückeswagen (DE)
(72) Erfinder: Finkeldey, Markus, 45527 Hattingen (DE); Merkert, Jan, 51688 Wipperfürth (DE); Stefer, Jonas, 51515 Kürten (DE)
(74) Vertreter: Janke Scholl Patentanwälte PartG mbB

(57) **Zusammenfassung**

Verfahren, mit den Verfahrensschritten: Bereitstellen eines Bauteils (2), wobei das Bauteil (2) eine Verzahnung (4) mit einer vorgegebenen Soll-Geometrie (22) aufweist; Bereitstellen einer Messeinrichtung (16), wobei die Messeinrichtung (16) ein optisches Messsystem (18) aufweist; Messen der Verzahnung (4) des Bauteils (2) mittels des optischen Messsystems (18), wobei Messpunkte (20) erfasst werden; Auswertung der Messpunkte (20); wobei die Auswertung der Messpunkte (20) zumindest die folgenden Schritte aufweist: Gruppierung der Messpunkte (20) zu Flankengruppen (26) durch Filterung; Modellierung von Profilsegmenten (28, 30) aus den Messpunkten (20) der Flankengruppen (26), wobei jeder Flankengruppe (26) ein Profilsegment (28, 30) zugeordnet wird; Bestimmung einer oder mehrerer geometrischer Kenngrößen der Verzahnung anhand der Profilsegmente (28, 30).

## Beschreibung

Gegenstand der Erfindung ist ein Verfahren, mit den Verfahrensschritten: Bereitstellen eines Bauteils, wobei das Bauteil eine Verzahnung mit einer vorgegebenen Soll-Geometrie aufweist; Bereitstellen einer Messeinrichtung, wobei die Messeinrichtung ein optisches Messsystem aufweist; Messen der Verzahnung des Bauteils mittels des optischen Messsystems, wobei Messpunkte erfasst werden; Auswertung der Messpunkte. Weiter betrifft die Erfindung eine Vorrichtung zur Durchführung eines solchen Verfahrens.

Optische Messsysteme gewinnen in der Verzahnungsmesstechnik zunehmend an Relevanz, da sie immer näher an die Genauigkeit taktiler Messsysteme heranreichen und häufig wesentlich schneller arbeiten als taktile Messsysteme.

Die taktile Teilungsmessung gehört zu den Standardmessaufgaben in der Verzahnungsanalyse und -bewertung. Hierbei werden, z.B. für eine Evolventenverzahnung, alle Abstände zwischen Evolventen auf der linken Seite aller Zähne und der rechten Seite aller Zähne, jeweils am Teilkreisdurchmesser und auf einer vorher definierten Messhöhe, gemessen. Unterschieden werden dabei zwei taktile Messarten, die Teilungsmessung über eine Punktantastung genau auf dem Teilkreisdurchmesser und die Messung eines Abschnitts der Flankenlinie am Teilkreisdurchmesser, mit anschließender Mittelung der Einzelmesspunkte. Die Messung anhand der Flankenlinie liefert robustere Ergebnisse, jedoch auf Kosten einer höheren Messzeit.

Anschließend werden die Messergebnisse mit einem Sollabstand einer Soll-Geometrie der Verzahnung verglichen und beispielsweise nach VDE- oder Firmen-Normen oder allgemeinen Normen wie DIN, ISO oder AGMA, bewertet. Messungen an abweichenden Durchmessern, also nicht direkt auf dem Teilkreisdurchmesser, und einer oder mehrerer Messhöhen sind dabei möglich.

Die Messdauer der taktilen Teilungsmessung ist relativ lang, insbesondere bei der Messung anhand der Flankenlinie, da jeder Abschnitt einer Flankenlinie auf jedem Zahn an exakt dem richtigen Durchmesser und der passenden Höhe gemessen werden muss. Der taktile Messtaster muss in jede Zahnlücke kollisionsfrei eintauchen, mit den jeweiligen Zahnflanken in Anlage gebracht werden und in jeder Zahnlücke zwei Messungen vollführen. Nach den Messungen innerhalb einer Zahnlücke wird der Messtaster zurückgezogen, das Zahnrad um eine Zahnteilung gedreht und der Messvorgang wird für die nächste Lücke wiederholt.

Eine solche Teilungsmessung könnte grundsätzlich mit einem berührungslos messenden optischen System mit einer wesentlich kürzeren Messdauer durchgeführt werden, in dem das Zahnrad kontinuierlich vor dem optischen System rotiert, wobei kein Einfädeln in die Lücke und kein Antasten der Flanken erforderlich ist. Bekannte Auswertestrategien, die zur Auswertung taktiler Messungen verwendet werden, führen im Zusammenhang mit optischen Messungen jedoch zu abweichenden oder verfälschten Ergebnissen. Denn die erfassten Messpunkte einer taktilen Messung und einer optischen Messung unterscheiden sich stark voneinander, insbesondere hinsichtlich ihrer Anzahl und ihrer Qualität.

So weisen taktile Messsysteme eine sehr hohe Genauigkeit für jeden einzelnen bestimmten Messpunkt auf, so dass häufig ein einzelner Messpunkt oder wenige Messpunkte zur Bestimmung eines geometrischen Merkmals ausreichen. Demgegenüber weisen optische Messsysteme eine geringere Genauigkeit der einzelnen Messpunkte auf, erfassen jedoch eine wesentlich höhere Anzahl von Messpunkten.

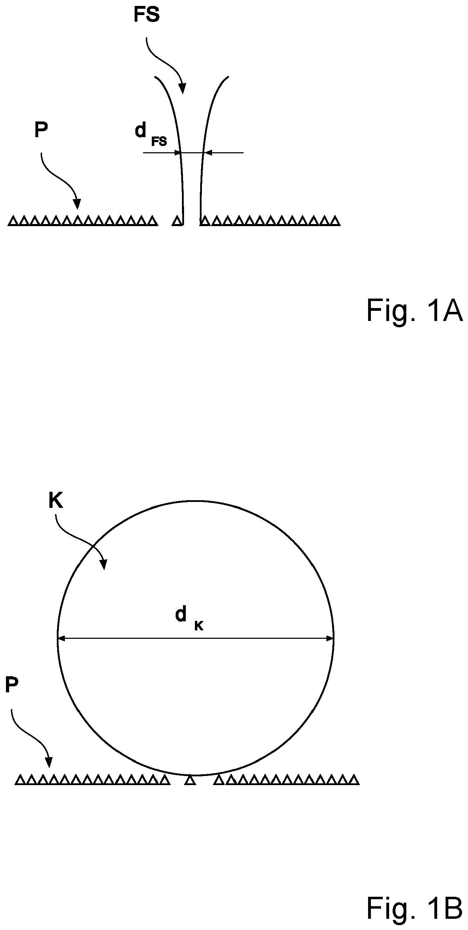

Hinzu kommt, dass optische und taktile Messsysteme sich hinsichtlich ihrer Interaktion mit einem zu messenden Bauteil unterscheiden. So zeigt Fig. 1A exemplarisch und schematisch eine Messung eines Oberflächenprofils P, das eine Oberflächenstruktur im Bereich von 10 Mikrometer aufweist, wie durch die Spitzen angedeutet. Ein fokussierter optischer Strahl FS eines optischen Messsystems misst dabei in das Oberflächenprofil P hinein, da sein Fokusdurchmesser d_{FS} z.B. lediglich 20 Mikrometer beträgt. Demgegenüber bewirkt eine taktile Messung desselben Oberflächenprofils P gemäß Fig. 1B eine Glättung bzw. morphologische Filterung, da eine zur Abtastung verwendete Tastkugel K einen Durchmesser d_{K} von z.B. 500 Mikrometer aufweisen kann, der um ein Vielfaches größer ist als der Fokusdurchmesser d_{FS}. Weiter erfasst die taktile Messung keine Staub- oder Schwebepartikel, die im Rahmen der optischen Messung zu Messpunkten führen können, die weit von der zu messenden Oberfläche entfernt sind.

Auswertestrategien, die für Messpunkte taktiler Messsysteme optimiert sind, führen daher zu abweichenden oder verfälschten Messergebnissen, soweit diese auf Messpunkte, die mit optischen Messsystemen erfasst worden sind, angewendet werden. Die Vergleichbarkeit zwischen optischer und taktiler Messung wird dadurch erschwert.

Vor diesem Hintergrund liegt der Erfindung die technische Problemstellung zugrunde, ein Verfahren und eine Vorrichtung anzugeben, die eine verbesserte optische Messung einer Verzahnung eines Bauteils ermöglichen, wobei insbesondere eine verbesserte Vergleichbarkeit zu den Messergebnissen taktiler Messungen erreicht werden kann.

Die voranstehend beschriebene, technische Problemstellung wird jeweils gelöst durch ein Verfahren nach Anspruch 1 und eine Vorrichtung nach Anspruch 10. Weitere Ausgestaltungen der Erfindung ergeben sich aus den abhängigen Ansprüchen und der nachstehenden Beschreibung.

Gemäß einem ersten Aspekt betrifft die Erfindung ein Verfahren, mit den Verfahrensschritten: Bereitstellen eines Bauteils, wobei das Bauteil eine Verzahnung mit einer vorgegebenen Soll-Geometrie aufweist; Bereitstellen einer Messeinrichtung, wobei die Messeinrichtung ein optisches Messsystem aufweist; Messen der Verzahnung des Bauteils mittels des optischen Messsystems, wobei Messpunkte erfasst werden; Auswertung der Messpunkte. Das Verfahren zeichnet sich dadurch aus, dass die Auswertung der Messpunkte zumindest die folgenden Schritte aufweist: Gruppierung der Messpunkte zu Flankengruppen durch Filterung; Modellierung von Profilsegmenten aus den Messpunkten der Flankengruppen, wobei jeder Flankengruppe ein Profilsegment zugeordnet wird; Bestimmung einer oder mehrerer geometrischer Kenngrößen der Verzahnung anhand der Profilsegmente.

Die Filterung der Messpunkte und die daraus resultierende Gruppierung ermöglichen eine verbesserte Modellierung der Profilsegmente, da nicht alle Messpunkte, sondern nur eine Teilmenge der Messpunkte ausgewertet werden. Die modellierten Profilsegmente geben daher die tatsächliche Form des Bauteils genauer wieder und ermöglichen eine präzisere Bestimmung einer oder mehrerer geometrischer Kenngrößen der Verzahnung.

Wenn vorliegend von "Profilsegmenten" gesprochen wird, so können diese zumindest abschnittsweise in einer Profilrichtung und/oder einer Flankenrichtung eines Zahns der Verzahnung erstreckt sein. Insbesondere kann ein Profilsegment eine Profillinie und/oder eine Flankenlinie eines Zahns der Verzahnung abbilden. Insbesondere kann ein Profilsegment eine Profillinie eines Zahns der Verzahnung abbilden. Insbesondere kann ein Profilsegment eine Flankenlinie eines Zahns der Verzahnung abbilden.

Wenn vorliegend von einer Verzahnung gesprochen wird, so kann es sich dabei um ein Ritzel oder ein Rad einer Laufverzahnung handeln. Die Verzahnung kann daher zur Drehmoment- und Drehzahlübertragung und Wandlung eingerichtet sein. Alternativ kann die Verzahnung Teil einer Steckverzahnung sein.

Die Verzahnung kann eine Evolventenverzahnung oder eine Zykloidenverzahnung sein. Die Verzahnung kann eine Triebstockverzahnung oder eine Wildhaber-Novikov Verzahnung sein.

Die Gruppierung der Messpunkte zu Flankengruppen durch Filterung kann den folgenden Verfahrensschritt aufweisen: Radiale Filterung der Messpunkte, wobei eine Mehrzahl der Messpunkte der Flankengruppen, insbesondere alle Messpunkte der Flankengruppen, zwischen einem vorgegebenen minimalen Radius und einem vorgegebenen maximalen Radius liegen. Auf diese Weise können z.B. Kopfbereiche und/oder Fußbereiche der Verzahnung ausgeblendet bzw. aussortiert oder gelöscht werden, soweit diese für die Bestimmung einer oder mehrerer geometrischer Kenngrößen der Verzahnung nicht berücksichtigt werden sollen. Insbesondere kann vorgesehen sein, dass der maximale Radius kleiner ist als ein Radius eines Kopfkreises der Verzahnung. Es kann vorgesehen sein, dass der minimale Radius größer ist als ein Radius eines Fußkreises der Verzahnung.

Die Gruppierung der Messpunkte zu Flankengruppen durch Filterung kann alternativ oder ergänzend den folgenden Verfahrensschritt aufweisen: Profilspezifische Filterung der Messpunkte, wobei eine Mehrzahl der Messpunkte der Flankengruppen, insbesondere alle Messpunkte der Flankengruppen, zu der vorgegebenen Soll-Geometrie der Verzahnung jeweils einen minimalen Abstand aufweisen, der einen vorgegebenen Abstand nicht überschreitet. Soweit für einen Messpunkt daher ein minimaler Abstand zu der vorgegebenen Soll-Geometrie der Verzahnung größer ist als der vorgegebene Abstand, wird der Messpunkt ausgeblendet bzw. aussortiert bzw. keiner Flankengruppe zugeordnet oder gelöscht. Mit anderen Worten kann ein Band oder eine Einhüllende um eine Flanke der Soll-Geometrie gelegt werden, wobei alle Messpunkte innerhalb des Bands bzw. der Einfüllenden der jeweiligen Flankengruppe zugeordnet werden. Die profilspezifische Filterung ermöglicht insbesondere ein Aussortieren bzw. Ausblenden oder Löschen von Messpunkten, die z.B. auf Störgrößen wie Staub, Schwebepartikel oder Verunreinigungen zurückzuführen sind.

Es kann vorgesehen sein, dass sowohl die radiale Filterung als auch die profilspezifische Filterung durchgeführt werden. Insbesondere kann vorgesehen sein, dass die profilspezifische Filterung nach der radialen Filterung durchgeführt wird.

Alternativ kann vorgesehen sein, dass die profilspezifische Filterung vor der radialen Filterung durchgeführt wird. Alternativ kann vorgesehen sein, dass die profilspezifische Filterung und die radiale Filterung zumindest teilweise simultan durchgeführt werden.

Die Gruppierung der Messpunkte zu Flankengruppen durch Filterung kann alternativ oder ergänzend den folgenden Verfahrensschritt aufweisen: Kinematische Filterung der Messpunkte, wobei eine Mehrzahl der Messpunkte der Flankengruppen, insbesondere alle Messpunkte der Flankengruppen, die Bedingung erfüllen, dass zum Zeitpunkt der Erfassung des jeweiligen Messpunkts ein Betrag einer Beschleunigung einer eine Messbewegung ausführenden Maschinenachse der Messeinrichtung kleiner als ein vorgegebener Schwellwert ist. Insbesondere können auf diese Weise Messpunkte ausgeblendet bzw. aussortiert oder gelöscht werden, die zu Beginn oder zum Ende der Messung erfasst werden, während eine oder mehrere Maschinenachsen stärker beschleunigt werden und/oder einen Ruck erfahren. Mit anderen Worten kann ein Einlauf und/oder ein Auslauf der Messung ausgeblendet bzw. aussortiert bzw. gelöscht werden. Die Flankengruppen weisen daher insbesondere keine Messpunkte auf, für deren Zeitpunkt der Erfassung eines jeweiligen Messpunkts ein Betrag einer Beschleunigung einer eine Messbewegung ausführenden Maschinenachse größer als ein vorgegebener Schwellwert ist.

Die Gruppierung der Messpunkte zu Flankengruppen durch Filterung kann alternativ oder ergänzend den folgenden Verfahrensschritt aufweisen: Qualitative Filterung der Messpunkte, wobei eine Mehrzahl der Messpunkte der Flankengruppen, insbesondere alle Messpunkte der Flankengruppen, die Bedingung erfüllen, dass während der Abbildung eines jeweiligen Messpunkts eine vorgegebene Belichtungszeit und/oder eine vorgegebene Intensität nicht unterschritten wird. So können Messpunkte ausgeblendet bzw. aussortiert oder gelöscht werden, die nicht zuverlässig abgebildet worden sind.

Insbesondere kann vorgesehen sein, dass während der Abbildung eines jeweiligen Messpunkts eine vorgegebene mittlere Intensität nicht unterschritten wird.

Die Belichtungszeit und die Intensität können auch zu einer Kennzahl verrechnet werden, z.B. im einfachsten Fall als Produkt oder Summe oder Quotient, die eine Beurteilung einer Qualität einer Abbildung eines jeweiligen Messpunkts ermöglicht. Insbesondere kann vorgesehen sein, dass eine Mehrzahl der Messpunkte der Flankengruppen, insbesondere alle Messpunkte der Flankengruppen, die Bedingung erfüllen, dass während der Abbildung eines jeweiligen Messpunkts ein vorgegebener Mindestwert der Kennzahl nicht unterschritten wird oder die Kennzahl in einem vorgegebenen Bereich liegt.

Es kann vorgesehen sein, dass die Gruppierung der Messpunkte zu Flankengruppen durch Filterung den folgenden Prüfschritt aufweist: Prüfen, ob die Anzahl der Flankengruppen einer doppelten Zähnezahl der Verzahnung entspricht. Sofern durch die Filterung eine Anzahl von Flankengruppen erzeugt wird, die nicht der doppelten Zähnezahl entspricht, sollte die Filterung angepasst werden. Denn nach der Filterung sollte jeder Zahnflanke der Verzahnung genau eine Flankengruppe mit Messpunkten zugeordnet sein. Soweit die Anzahl der durch Filterung erzeugten Flankengruppen nicht der doppelten Zähnezahl der Verzahnung entspricht, können die Filterung angepasst und der Prüfschritt erneut durchgeführt werden.

Alternativ oder ergänzend kann vorgesehen sein, dass die Gruppierung der Messpunkte zu Flankengruppen durch Filterung den folgenden Prüfschritt aufweist: Prüfen, ob die Anzahl der Messpunkte einer jeweiligen Flankengruppe eine vorgegebene Mindestanzahl überschreitet. Insbesondere kann die anschließende Modellierung der Profilsegmente nur dann sinnvoll erfolgen, wenn eine ausreichende Anzahl von Messpunkten für eine jeweilige Flankengruppe vorhanden ist. Soweit die Anzahl der Messpunkte einer jeweiligen Flankengruppe eine vorgegebene Mindestanzahl unterschreitet, kann die Messung mit geänderten Messparametern wiederholt und die Anzahl der Messpunkte erneut geprüft werden.

Alternativ oder ergänzend kann vorgesehen sein, dass die Gruppierung der Messpunkte zu Flankengruppen durch Filterung den folgenden Prüfschritt aufweist: Prüfen, ob die Messpunkte einer jeweiligen Flankengruppe eine vorgegebene Verteilung aufweisen. Es kann daher geprüft werden, inwieweit benachbarte Punkte einen maximalen Abstand zueinander überschreiten und/oder einen minimalen Abstand zueinander unterschreiten. Es wird daher eine möglichst homogene Verteilung der Messpunkte angestrebt. Soweit die Verteilung zu ungleichmäßig ist, kann die Messung mit geänderten Messparametern wiederholt und die Verteilung erneut geprüft werden.

Es kann vorgesehen sein, dass einer oder mehrere der vorgenannten Prüfschritte vor der Modellierung ausgeführt werden. So kann die anschließende Modellierung verbessert werden.

Nach einer Ausgestaltung des Verfahrens ist vorgesehen, dass die Modellierung von Profilsegmenten aus den Messpunkten der Flankengruppen, wobei jeder Flankengruppe ein Profilsegment zugeordnet ist, einen der folgenden Verfahrensschritte aufweist: Modellierung mindestens eines Profilsegments als mathematische nichtlineare Funktion höherer Ordnung oder Modellierung mehrerer Profilsegmente jeweils als mathematische nichtlineare Funktion höherer Ordnung oder Modellierung aller Profilsegmente jeweils als mathematische nichtlineare Funktion höherer Ordnung.

Aus den Messpunkten können daher durch Ausgleichs- und/oder Interpolationsrechnung Kurvensegmente bzw. Profilsegmente modelliert werden, die jeweils als mathematische nichtlineare Funktion höherer Ordnung beschrieben werden können.

Wenn vorliegend von nichtlinearen Funktion höherer Ordnung gesprochen wird, so handelt es sich dabei insbesondere um quadratische Funktionen, Polynomfunktionen, Potenzfunktionen und dergleichen. Die Wahl der passenden Funktion hängt von der Art der Verzahnung ab, d.h. ob die Verzahnung eine Evolventenverzahnung, eine Zykloidenverzahnung, eine Triebstockverzahnung oder eine Wildhaber-Novikov Verzahnung ist.

Nach einer Ausgestaltung des Verfahrens ist vorgesehen, dass die Modellierung von Profilsegmenten aus den Messpunkten der Flankengruppen, wobei jeder Flankengruppe ein Profilsegment zugeordnet ist, eine Plausibilitätsprüfung mit dem folgenden Verfahrensschritt aufweist: Erstellen eines linken, gemittelten Ausgleichs-Profilsegments aus Profilsegmenten linker Flankengruppen und Überprüfen einer Abweichung mindestens eines Profilsegments einer linken Flankengruppe von dem linken, gemittelten Ausgleichs-Profilsegment. Das linke, gemittelte Ausgleichs-Profilsegment kann daher durch Mittelwertbildung bzw. Superposition aller Profilsegmente der linken Flankengruppen gebildet werden. Es kann eine Anpassung der Filterung und/oder eine Anpassung eines Messparameters erfolgen, falls eine Abweichung einen vorgegebenen Schwellwert überschreitet.

Messparameter sind insbesondere Achspositionen, Achsgeschwindigkeiten und Achsbeschleunigungen von eine Messbewegung ausführenden Maschinenachsen und/oder Parameter der optischen Messeinrichtung, wie Belichtungszeit, Abtastfrequenz, Beleuchtungsintensität, Messwinkel, Fokusdurchmesser und dergleichen.

Alternativ oder ergänzend ist nach einer Ausgestaltung des Verfahrens vorgesehen, dass die Modellierung von Profilsegmenten aus den Messpunkten der Flankengruppen, wobei jeder Flankengruppe ein Profilsegment zugeordnet ist, eine Plausibilitätsprüfung mit dem folgenden Verfahrensschritt aufweist: Überprüfen einer Abweichung mindestens eines Profilsegments einer linken Flankengruppe von einem weiteren Profilsegment einer linken Flankengruppe. Es kann eine Anpassung der Filterung und/oder eine Anpassung eines Messparameters erfolgen, falls eine Abweichung einen vorgegebenen Schwellwert überschreitet.

Alternativ oder ergänzend ist nach einer Ausgestaltung des Verfahrens vorgesehen, dass die Modellierung von Profilsegmenten aus den Messpunkten der Flankengruppen, wobei jeder Flankengruppe ein Profilsegment zugeordnet ist, eine Plausibilitätsprüfung mit dem folgenden Verfahrensschritt aufweist: Erstellen eines rechten, gemittelten Ausgleichs-Profilsegments aus Profilsegmenten rechter Flankengruppen und Überprüfen einer Abweichung mindestens eines Profilsegments einer rechten Flankengruppe von dem rechten, gemittelten Ausgleichs-Profilsegment. Das rechte, gemittelte Ausgleichs-Profilsegment kann daher durch Mittelwertbildung bzw. Superposition aller Profilsegmente der rechten Flankengruppen gebildet werden. Es kann eine Anpassung der Filterung und/oder eine Anpassung eines Messparameters erfolgen, falls eine Abweichung einen vorgegebenen Schwellwert überschreitet.

Alternativ oder ergänzend ist nach einer Ausgestaltung des Verfahrens vorgesehen, dass die Modellierung von Profilsegmenten aus den Messpunkten der Flankengruppen, wobei jeder Flankengruppe ein Profilsegment zugeordnet ist, eine Plausibilitätsprüfung mit dem folgenden Verfahrensschritt aufweist: Überprüfen einer Abweichung mindestens eines Profilsegments einer rechten Flankengruppe von einem weiteren Profilsegment einer rechten Flankengruppe. Es kann eine Anpassung der Filterung und/oder eine Anpassung eines Messparameters erfolgen, falls eine Abweichung einen vorgegebenen Schwellwert überschreitet.

Alternativ oder ergänzend ist nach einer Ausgestaltung des Verfahrens vorgesehen, dass die Modellierung von Profilsegmenten aus den Messpunkten der Flankengruppen, wobei jeder Flankengruppe ein Profilsegment zugeordnet ist, eine Plausibilitätsprüfung mit dem folgenden Verfahrensschritt aufweist: Überprüfen einer Abweichung des linken, gemittelten Ausgleichs-Profilsegments von der vorgegebenen Soll-Geometrie. Es kann eine Anpassung der Filterung und/oder eine Anpassung eines Messparameters erfolgen, falls eine Abweichung einen vorgegebenen Schwellwert überschreitet.

Alternativ oder ergänzend ist nach einer Ausgestaltung des Verfahrens vorgesehen, dass die Modellierung von Profilsegmenten aus den Messpunkten der Flankengruppen, wobei jeder Flankengruppe ein Profilsegment zugeordnet ist, eine Plausibilitätsprüfung mit dem folgenden Verfahrensschritt aufweist: Überprüfen einer Abweichung des rechten, gemittelten Ausgleichs-Profilsegments von der vorgegebenen Soll-Geometrie. Es kann eine Anpassung der Filterung und/oder eine Anpassung eines Messparameters erfolgen, falls eine Abweichung einen vorgegebenen Schwellwert überschreitet.

Alternativ oder ergänzend ist nach einer Ausgestaltung des Verfahrens vorgesehen, dass die Modellierung von Profilsegmenten aus den Messpunkten der Flankengruppen, wobei jeder Flankengruppe ein Profilsegment zugeordnet ist, eine Plausibilitätsprüfung mit dem folgenden Verfahrensschritt aufweist: Überprüfen einer Abweichung mindestens eines Profilsegments von der vorgegebenen Soll-Geometrie und/oder von einer Ausgleichs-Geometrie, wobei die Ausgleichs-Geometrie aus den Profilsegmenten der Flankengruppen bestimmt worden ist. Die Ausgleichs-Geometrie kann beispielsweise nach der Methode der kleinsten Fehlerquadrate aus den Profilsegmenten der Flankengruppen bestimmt worden sein. Es kann eine Anpassung der Filterung und/oder eine Anpassung eines Messparameters erfolgen, falls eine Abweichung einen vorgegebenen Schwellwert überschreitet.

Alternativ oder ergänzend ist nach einer Ausgestaltung des Verfahrens vorgesehen, dass die Modellierung von Profilsegmenten aus den Messpunkten der Flankengruppen, wobei jeder Flankengruppe ein Profilsegment zugeordnet ist, eine Plausibilitätsprüfung mit dem folgenden Verfahrensschritt aufweist: Überprüfen einer Abweichung eines ersten Profilsegments eines Zahns der Verzahnung einer ersten Messung von einem zweiten Profilsegment desselben Zahns einer zweiten Messung. Soweit ein Zahn oder mehrere Zähne zweimal oder mehrfach gemessen oder modelliert werden, kann so überprüft werden, ob das Modell geschlossen ist, d.h. das Modell sich wiederholt auf sich selbst abbilden lässt.

Nach einer Ausgestaltung des Verfahrens kann vorgesehen sein, dass dreidimensionale Messpunkte mindestens einer Flankengruppe, mehrerer Flankengruppen oder aller Flankengruppen in eine zweidimensionale Ebene projiziert werden, insbesondere vor dem Erstellen von Profilsegmenten, wobei die Modellierung von Profilsegmenten aus den Messpunkten insbesondere in der zweidimensionalen Ebene als zweidimensionale Profilsegmente erfolgt.

Wenn vorliegend von "dreidimensionalen Messpunkten" gesprochen wird, so bedeutet dies, dass einem jeweiligen Messpunkt drei Raumkoordinaten zugeordnet sind, und zwar z.B. ein x-Wert, ein y-Wert und ein z-Wert in einem kartesischen Koordinatensystem x-y-z. Durch eine Projektion in eine zweidimensionale Ebene wird einer dieser Werte für alle Messwerte gleichgesetzt und hat daher für alle Messwerte den gleichen Wert. Für die Projektion kann eine bekannte Sollgeometrie der Verzahnung berücksichtigt werden, wie z.B. ein Schrägungswinkel etc., so dass die Projektionsebene z.B. einem Profilschnitt oder einem Stirnschnitt entspricht und/oder die Messpunkte entlang ihrer zugeordneten Flankenlinie der Soll-Geometrie projiziert werden.

Alternativ kann vorgesehen sein, dass ein dreidimensionales Profilsegment einer Flankengruppe, dreidimensionale Profilsegmente mehrerer Flankengruppen oder dreidimensionale Profilsegmente aller Flankengruppen in eine zweidimensionale Ebene projiziert werden.

Es kann vorgesehen sein, dass eine Zahnteilung eine der einen oder mehreren geometrischen Kenngrößen der Verzahnung ist und die Bestimmung der Zahnteilung an einem Teilungsmesskreis erfolgt und/oder eine Teilungsabweichung eine der einen oder mehreren geometrischen Kenngrößen der Verzahnung ist, wie eine Teilungseinzelabweichung, eine Teilungsgesamtabweichung, ein Teilungssprung oder dergleichen.

Es kann vorgesehen sein, dass das Bauteil während des Erfassens der Messpunkte relativ zu dem optischen Messsystem bewegt wird. Insbesondere kann das Bauteil um eine Achse rotiert werden. Insbesondere kann das Bauteil um eine Achse rotiert werden, während das optische Messsystem feststeht und/oder mittels einer oder mehrerer Linearachsen verschoben wird.

Es kann vorgesehen sein, dass das Bauteil während des Erfassens der Messpunkte relativ zu dem optischen Messsystem kontinuierlich bewegt wird. Insbesondere kann das Bauteil kontinuierlich um eine Achse rotiert werden, während das optische Messsystem feststeht und/oder mittels einer oder mehrerer Linearachsen verschoben wird.

Es kann vorgesehen sein, dass ein Fokusdurchmesser des optischen Messsystems 50 Mikrometer oder weniger beträgt, insbesondere 20 Mikrometer oder weniger beträgt.

Das optische Messsystem kann einen Punktsensor aufweisen, der zur optischen Abstandsmessung eingerichtet ist. Insbesondere können durch den Punktsensor einzelne Messpunkte nacheinander gemessen werden. Jeder einzelne Messpunkt kann unabhängig und separat von weiteren Messpunkten mittels des Punktsensors erfassbar sein. D.h. mittels des Punktsensors kann es insbesondere möglich sein, einen einzelnen Messpunkt zu erfassen, ohne gleichzeitig weitere Messpunkte zu erfassen. Jedem einzelnen Messpunkt können drei Raumkoordinaten zugeordnet sein, und zwar z.B. ein x-Wert, ein y-Wert und ein z-Wert in einem kartesischen Koordinatensystem x-y-z.

Es kann vorgesehen sein, dass der Punktsensor zur optischen Abstandsmessung eine Tiefenauflösung aufweist.

Beispielsweise kann entlang einer optischen Achse des Punktsensors betrachtet in einem Tiefenmessbereich entlang der optischen Achse eine Tiefe, d.h. ein Abstand der optisch angetasteten Oberfläche bzw. Zahnflanke entlang der optischen Achse in einem vorgegebenen Koordinatensystem gemessen werden - z.B. ein Abstand zu einem Ursprung des vorgegebenen Koordinatensystems oder zu einer anderen geometrischen Referenz, wie der Position einer Linse oder dergleichen. Es kann vorgehen sein, dass die Abstandsmessung eindimensional entlang einer optischen Achse erfolgt und dreidimensionale Messwerte anhand der Position des optischen Messsystems errechnet werden.

Beispielsweise kann entlang einer optischen Achse des Punktsensors betrachtet in einem Tiefenmessbereich von wenigen Zentimetern oder wenigen Millimetern oder in einem Tiefenmessbereich von weniger als einem Millimeter entlang der optischen Achse eine Tiefe, d.h. ein Abstand der optisch angetasteten Oberfläche bzw. Zahnflanke entlang der optischen Achse in einem vorgegebenen Koordinatensystem gemessen werden - z.B. ein Abstand zu einem Ursprung des vorgegebenen Koordinatensystems oder zu einer anderen geometrischen Referenz, wie der Position einer Linse oder dergleichen. Anhand der Abstandsinformation des Punktsensors kann insbesondere ein dreidimensionaler Messpunkt erzeugt werden, wobei Informationen zu Achspositionen einer Koordinatenmessmaschine berücksichtigt werden können, die den optischen Punktsensor trägt. Es kann vorgehen sein, dass die Abstandsmessung eindimensional entlang einer optischen Achse erfolgt und dreidimensionale Messwerte anhand der Position des optischen Messsystems errechnet werden.

Es kann vorgesehen, dass der Punktsensor nach einem der folgenden Messprinzipien arbeitet: Lasertriangulation, konfokale oder konfokal-chromatische Abstandsmessung, interferometrische Abstandsmessung, Doppel-Frequenzkamm-Spektroskopie oder dergleichen.

Es kann vorgesehen sein, dass das optische Messsystem einen einzelnen Punktsensor zur optischen Abstandsmessung aufweist.

Es kann vorgesehen sein, dass das optische Messsystem zwei oder mehr Punktsensoren zur optischen Abstandsmessung aufweist.

Es kann vorgesehen sein, dass Punktsensoren entlang einer Linie aufgereiht oder gitterartig verteilt in Zeilen und Spalten angeordnet sind. Es kann vorgesehen sein, dass einer oder mehrere Punktsensoren nach einem dem nachfolgend aufgelisteten Messprinzipien arbeiten: Lasertriangulation, konfokale oder konfokal-chromatische Abstandsmessung, interferometrische Abstandsmessung, Doppel-Frequenzkamm-Spektroskopie oder dergleichen. Jeder der Punktsensoren ist daher insbesondere in voranstehend beschriebener Weise zur optischen Abstandsmessung eingerichtet und weist insbesondere einen Tiefenmessbereich mit einer Tiefenauflösung entlang einer optischen Achse auf. Die Punktsensoren können gleichzeitig Messwerte erfassen.

Das optische Messsystem weist insbesondere keine Kamera auf. Das optische Messsystem weist insbesondere keine Kamera zur zweidimensionalen Bildgebung auf.

Es kann vorgesehen sein, dass insbesondere keine Kamera zur Erfassung von Messpunkten durch Bild- oder Pixelanalyse verwendet wird. Es kann insbesondere vorgehen sein, dass keine Kamera zur zweidimensionalen Bildgebung zur Erfassung von Messpunkten durch Bild- oder Pixelanalyse verwendet wird.

Messpunkte werden insbesondere auf den jeweiligen Zahnflanken einer Verzahnung mit einem Abstand zu Randbereichen der jeweiligen Zahnflanken erfasst.

Es kann vorgesehen sein, dass eine optische Achse des optischen Messsystems während der Erfassung eines Messpunkts auf einer Zahnflanke einen Winkel mit der Zahnflanke einschließt, der ungleich 90° ist. Mit anderen Worten kann vorgesehen sein, dass eine von dem Messpunkt ausgehende Normale auf der Zahnflanke nicht kollinear zu der optischen Achse orientiert ist.

Es kann vorgesehen sein, dass auf einer jeweiligen Zahnflanke mehrere Messpunkte entlang einer Zahnbreite, d.h. in Flankenlinienrichtung, erfasst werden. Es kann vorgesehen sein, dass auf einer jeweiligen Zahnflanke mehrere Messpunkte entlang einer Zahnbreite, d.h. in Flankenlinienrichtung, als Einzelmesspunkte erfasst werden, wobei insbesondere ein erster Einzelmesspunkt in Flankenlinienrichtung zeitlich vor einem zweiten Einzelmesspunkt in Flankenlinienrichtung erfasst wird.

Die Begriffe Zahnflanke und Flanke werden vorliegend synonym verwendet.

Es kann vorgesehen sein, dass die Bestimmung einer oder mehrerer geometrischer Kenngrößen der Verzahnung anhand der Profilsegmente analog zur Auswertung einer taktilen Messung erfolgt und/oder mit einer Auswertesoftware zum Auswerten einer taktilen Messung erfolgt. Die Filterung und Modellierung ermöglicht daher insbesondere die Anwendung von Auswertalgorithmen, die für eine taktile Messung optimiert sind, auf die Ergebnisse der optischen Messung.

Gemäß einem zweiten Aspekt betrifft die Erfindung eine Vorrichtung, mit einer Messeinrichtung, wobei die Messeinrichtung ein optisches Messsystem aufweist, mit einer Aufnahme zum Halten eines Bauteils, mit einer Steuerungs- und Auswerteeinheit, eingerichtet zur Durchführung des erfindungsgemäßen Verfahrens.

Die Messeinrichtung kann eine Koordinatenmessvorrichtung sein. Die Koordinatenmessvorrichtung kann numerisch gesteuerte Achsen aufweisen, um vor und/oder während und/oder nach der Messung eine Relativbewegung zwischen dem zu messenden Bauteil und der optischen Messvorrichtung auszuführen.

Die Koordinatenmessvorrichtung kann eine Rotationsachse aufweisen, um ein zu messendes Bauteil während der Messung um seine eigene Achse zu rotieren.

Die Koordinatenmessvorrichtung kann mindestens eine Linearachse, zwei oder mehr Linearachsen, drei oder mehr Linearachsen oder genau drei Linearachsen aufweisen, um das optische Messsystem relativ zum zu messenden Bauteil zu bewegen.

Die Koordinatenmessvorrichtung kann ergänzend zum optischen Messsystem ein taktiles Messsystem aufweisen, um ein Bauteil taktil durch Antasten mit einem Messtaster zu vermessen.

Nachfolgend wird die Erfindung anhand einer Ausführungsbeispiele darstellenden Zeichnung näher beschrieben. Es zeigen jeweils schematisch:
- Fig. 1A: eine optische Messung;
- Fig. 1B: eine taktile Messung;
- Fig. 2A: ein zu messendes Bauteil;
- Fig. 2B: eine optische Messung des zu messenden Bauteils aus Fig. 2A
- Fig. 3A: Messpunkte der optischen Messung;
- Fig. 3B: Messpunkte der optischen Messung aus Fig. 3A in vergrößerter Darstellung;
- Fig. 3C: Messpunkte der optischen Messung aus Fig. 3B vor der radialen Filterung;
- Fig. 3D: Messpunkte der optischen Messung aus Fig. 3B nach der radialen Filterung;
- Fig. 3E: Messpunkte der optischen Messung aus Fig. 3D vor der profilspezifischen Filterung;
- Fig. 3F: Messpunkte zweier Flankengruppen der optischen Messung aus Fig. 3D nach der profilspezifischen Filterung;
- Fig. 3G: Modellierte Profilsegmente zweier Flankengruppen mit der Soll-Geometrie;
- Fig. 3H: Modellierte Profilsegmente in einer Gesamtübersicht;
- Fig. 3I: Modellierte Profilsegmente in einer Gesamtübersicht mit der Soll-Geometrie und einer Ausgleichs-Geometrie;
- Fig. 3J: Messpunkte der Flankengruppen der optischen Messung aus Fig. 3D nach der radialen Filterung und nach der profilspezifischen Filterung in einer Gesamtübersicht;
- Fig. 4A: Abweichung eines linken Profilsegments zu einem linken, gemittelten Ausgleichs-Profilsegment;
- Fig. 4B: Abweichung eines rechten Profilsegments zu einem rechten, gemittelten Ausgleichs-Profilsegment;
- Fig. 4C: Abweichung eines linken Profilsegments zu einem weiteren linken Profilsegment;
- Fig. 4D: Abweichung eines rechten Profilsegments zu einem weiteren rechten Profilsegment;
- Fig. 4E: Abweichung eines linken gemittelten Ausgleichs-Profilsegments von der Soll-Geometrie;
- Fig. 4F: Abweichung eines rechten gemittelten Ausgleichs-Profilsegments von der Soll-Geometrie;

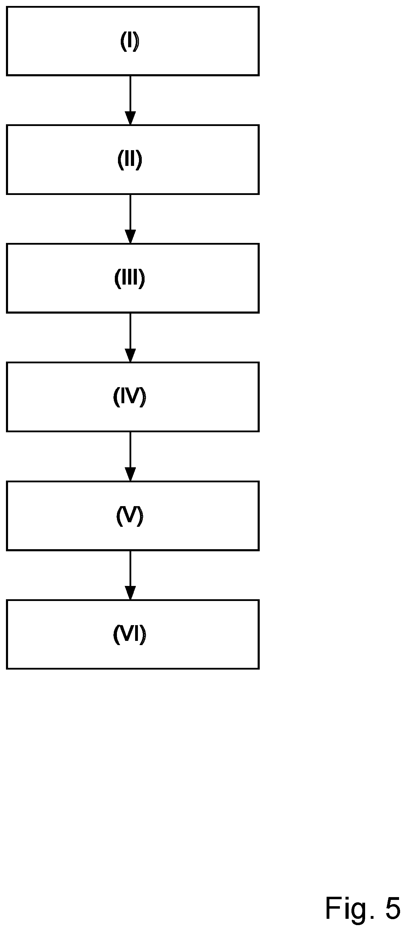

- Fig. 5: einen Ablaufplan des erfindungsgemäßen Verfahrens.

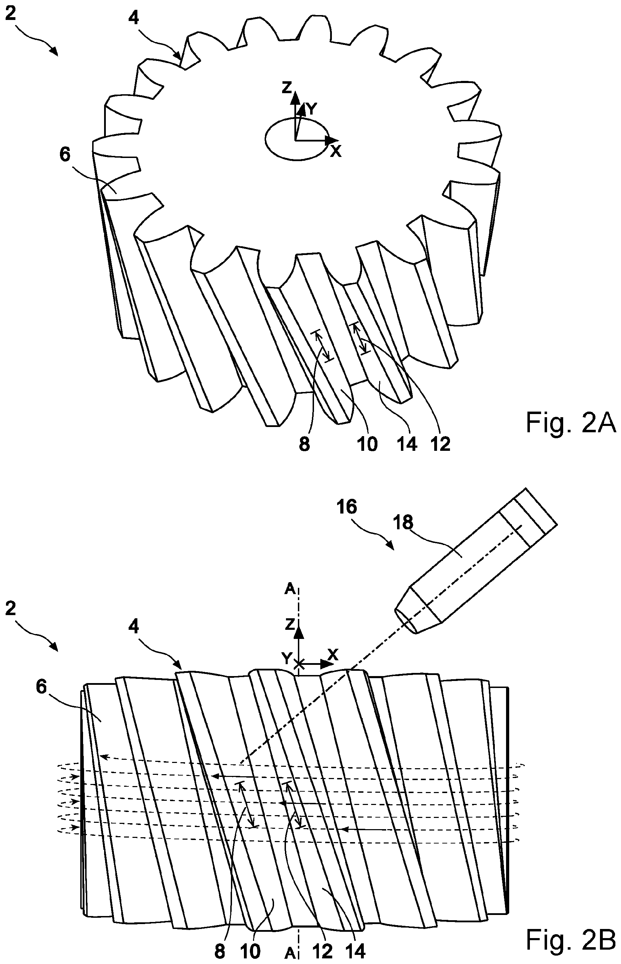

Fig. 2A zeigt ein Bauteil 2 mit einer Verzahnung 4. Das Bauteil 2 ist ein schrägverzahntes Stirnrad 2 mit einer Evolventenverzahnung 4. An dem Stirnrad 2 soll die Zahnteilung der Verzahnung 4 gemessen werden. Hierzu sollen an jedem Zahn 6 der Verzahnung 4 jeweils ein Flankenlinienabschnitt 8 an einer linken Flanke 10 und jeweils ein Flankenlinienabschnitt 12 an einer rechten Flanke 14 gemessen werden. Exemplarisch sind ein Flankenlinienabschnitt 8 an einer linken Flanke 10 und ein Flankenlinienabschnitt 12 an einer rechten Flanke 14 zweier benachbarter Zähne 6 dargestellt.

Das Stirnrad 4 wird vorliegend mittels einer Messeinrichtung 16 gemessen, die ein optisches Messsystem 18 aufweist (Schritt (I)). Während der Messung rotiert das Stirnrad 2 kontinuierlich um seine eigene Achse A, die insbesondere kollinear zur z-Achse des kartesischen Koordinatensystems x-y-z ausgerichtet sein kann. Es versteht sich, dass auch jedes beliebige andere kartesische Koordinatensystem oder Polar-Koordinatensystem verwendet werden kann.

Zusätzlich zu der Drehung um die z-Achse findet eine lineare Relativbewegung in z-Richtung statt, so dass sich der durch die gestrichelten Linien angedeutete Messweg ergibt, der die zu messenden Flankenlinienabschnitte 8, 12 aller Zähne 6 abdeckt. Dabei misst das optische Messsystem 18 die vollständigen Zahnprofile, inklusive dem Zahnkopf, der Zahnflanke und dem Zahnfuß eines jeden Zahns.

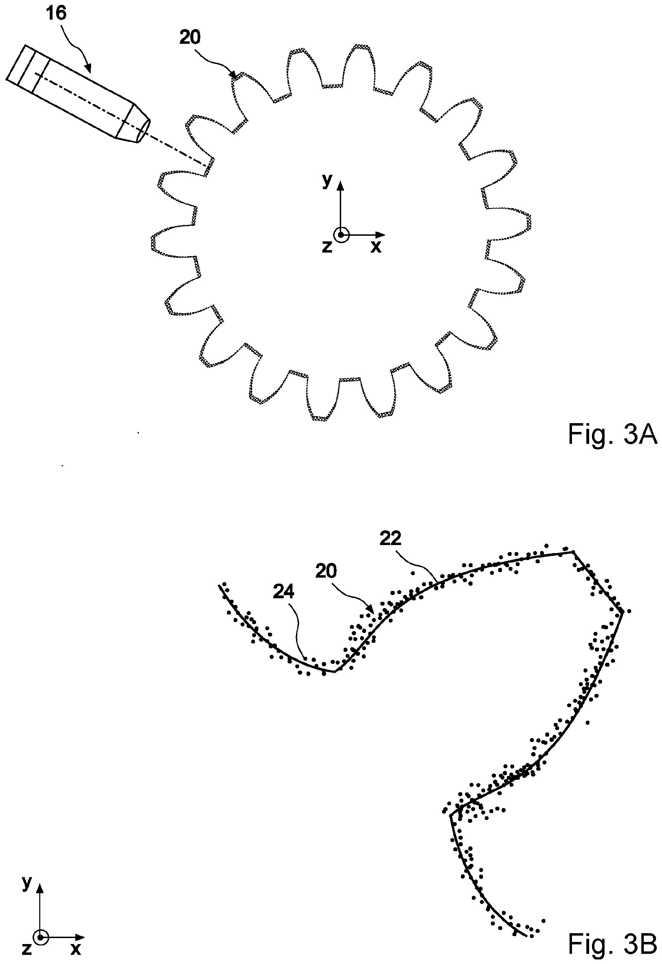

Es werden daher eine Vielzahl von Messpunkten 20 erfasst, wobei die Messpunkte 20 in Fig. 3A für eine Ansicht im Stirnschnitt dargestellt sind. Fig. 3B zeigt eine vergrößerte Darstellung von Messpunkten 20 eines Zahns im Stirnschnitt, wobei ein Ausschnitt einer vorgegebenen Soll-Geometrie 22 der Verzahnung 4 in Form einer Profillinie 22 dargestellt ist. Jeder einzelne Messpunkt 24 der Vielzahl von Messpunkten 20 ist durch einen x-Wert, einen y-Wert und einen z-Wert definiert, also dessen Position im Raum gemäß dem kartesischen Koordinatensystem x-y-z.

In einem nächsten Schritt erfolgt eine Gruppierung der Messpunkte 20 zu Flankengruppen 26 durch Filterung (Schritt (II)).

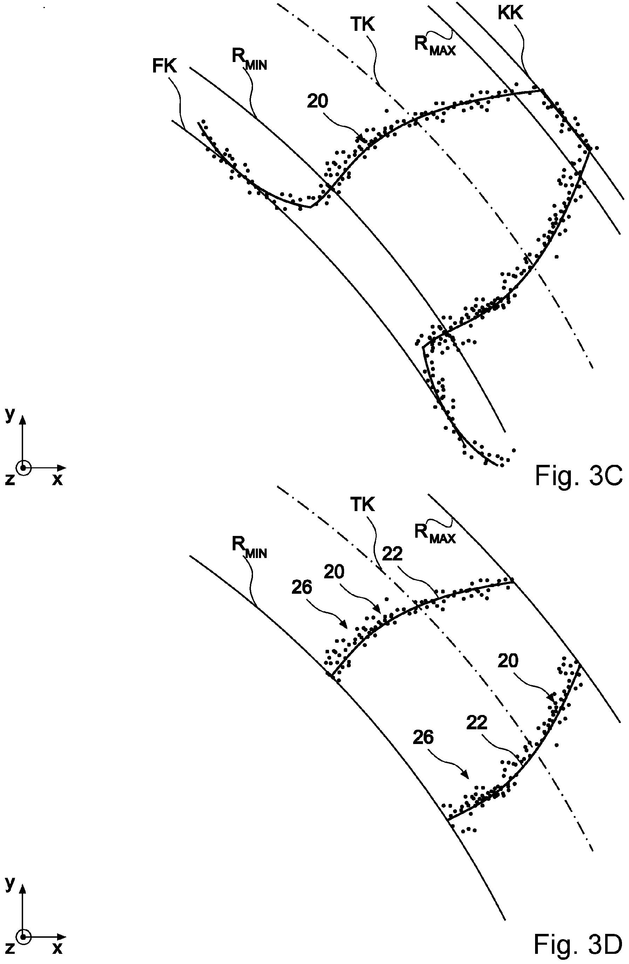

Die Figuren 3C und 3D veranschaulichen eine radiale Filterung der Messpunkte 20, wobei alle Messpunkte 20 der Flankengruppen 26 zwischen einem vorgegebenen Kreis R_{MIN} mit einem minimalen Radius und einem vorgegebenen Kreis R_{MAX} mit einem maximalen Radius liegen. Der Radius des Kreises R_{MIN} ist größer als ein Radius des Fußkreises FK der Verzahnung 4. Der Radius des Kreises R_{MAX} ist kleiner als ein Radius des Kopfkreises KK der Verzahnung 4. Weiter ist der Teilkreis TK eingezeichnet.

Wird der in Fig. 3C gezeigte radiale Filter auf die Messpunkte angewendet, werden alle Messpunkte außerhalb des von R_{MIN} und R_{MAX} begrenzten Filterbandes aussortiert bzw. ausgeblendet oder gelöscht. Die nach der radialen Filterung verbleibenden Messpunkte 20 sind in Fig. 3D dargestellt. Zur besseren Übersichtlichkeit sind nunmehr auch diejenigen Bereiche des Soll-Profils 22 ausgeblendet, die nicht zwischen R_{MIN} und R_{MAX} liegen.

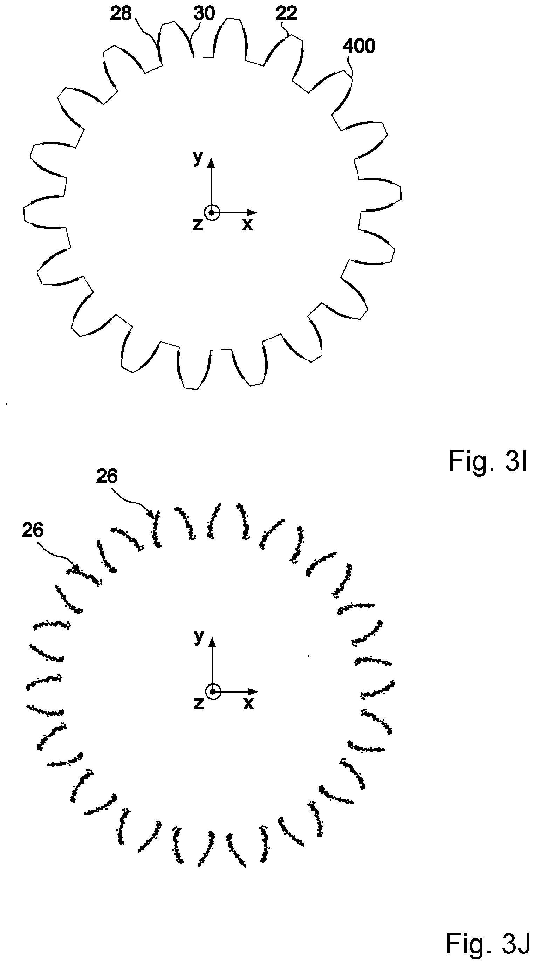

Durch diese radiale Filterung wird bereits die Anzahl der Flankengruppen 26 definiert, die auch als zusammenhängende Messabschnitte 26 bezeichnet werden können. Das Ergebnis der radialen Filterung ist zudem in Fig. 3J veranschaulicht, die die Flankengruppen 26 für alle Zähne 6 der Verzahnung 4 zeigt, wobei nur zwei Flankengruppen 26 mit einem Bezugszeichen versehen worden sind.

Es wird jetzt überprüft, ob die Anzahl der Flankengruppen 26 der doppelten Zähnezahl der Verzahnung 4 entspricht, wobei die Zähnezahl hier gleich 18 ist (Schritt (III)). Vorliegend ergibt die Prüfung, dass die Anzahl der Flankengruppen 26 der doppelten Zähnezahl entspricht, da 36 Flankengruppen erzeugt worden sind. Die Prüfung der radialen Filterung ist daher positiv und die radiale Filterung muss nicht angepasst werden. Jeder einzelnen linken Flanke und jeder einzelnen rechten Flanke der Verzahnung ist daher jeweils eine Flankengruppe 26 bzw. jeweils ein zusammenhängender Messabschnitt 26 zugeordnet.

Es wird weiter geprüft, ob jede der jeweiligen Flankengruppen jeweils eine ausreichende Anzahl von Messpunkten aufweist und diese Messpunkte einer jeweiligen Flankengruppe ausreichend gleichmäßig verteilt sind (Schritt (III)).

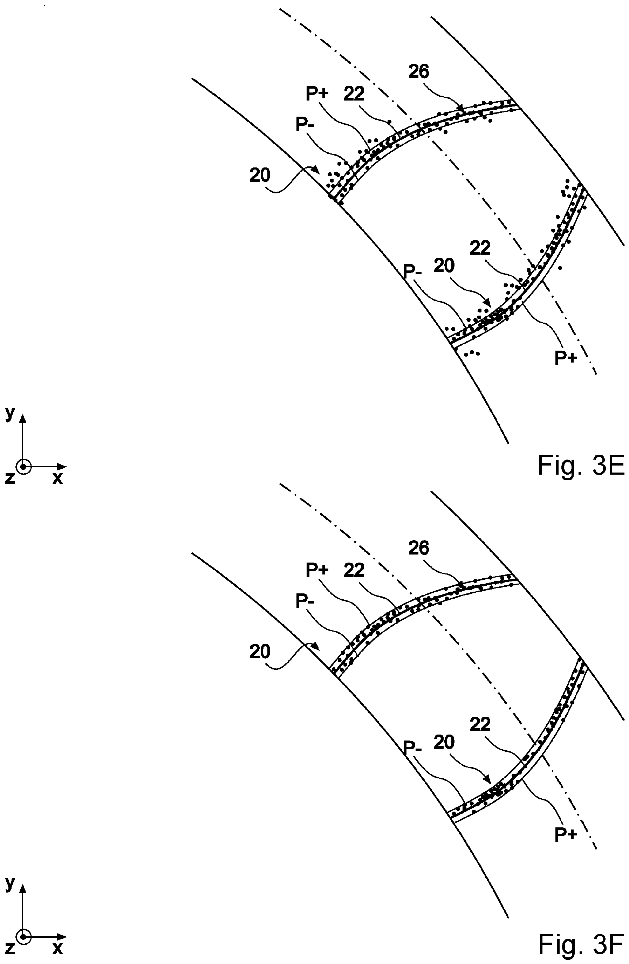

In einem nächsten Schritt erfolgt eine profilspezifische Filterung, wobei alle Messpunkte 20 einer jeweiligen Flankengruppe 26 zu der vorgegebenen Soll-Geometrie 22 der Verzahnung 4 jeweils einen minimalen Abstand aufweisen, der einen vorgegebenen Abstand nicht überschreitet. D.h. jede der Flankengruppen 26 wird erneut gefiltert, wie mit Bezug zu den Figuren 3E und 3F nachfolgend beschrieben wird (Schritt (IV)).

Für jede Flankengruppe 26 werden gemäß Fig. 3E und 3F diejenigen Messpunkte 20 aussortiert bzw. ausgeblendet oder gelöscht, die nicht innerhalb eines von den Linien P+ und P- begrenzten Bands liegen, wobei P+ und P- im Wesentlichen versetzte Profillinien des Soll-Profils sind. Fig. 3F zeigt die Flankengruppen 26 nach dem Anwenden der profilspezifischen Filterung.

Weiter erfolgt eine kinematische Filterung der Messpunkte 20, wobei alle Messpunkte 20 der Flankengruppen 26 die Bedingung erfüllen, dass zum Zeitpunkt der Erfassung des jeweiligen Messpunkts 20 ein Betrag einer Beschleunigung einer eine Messbewegung ausführenden Maschinenachse A der Messeinrichtung 16 kleiner als ein vorgegebener Schwellwert ist, wobei die Maschinenachse A eine die Rotation ausführende Spindelachse A ist, die entlang der z-Achse erstreckt ist und das Bauteil 2 trägt (Schritt (IV)).

Zudem erfolgt eine qualitative Filterung der Messpunkte 20, wobei alle Messpunkte 20 der Flankengruppen 26 die Bedingung erfüllen, dass während der Abbildung eines jeweiligen Messpunkts 24 eine vorgegebene Belichtungszeit und/oder eine vorgegebene Intensität nicht unterschritten werden (Schritt (IV)).

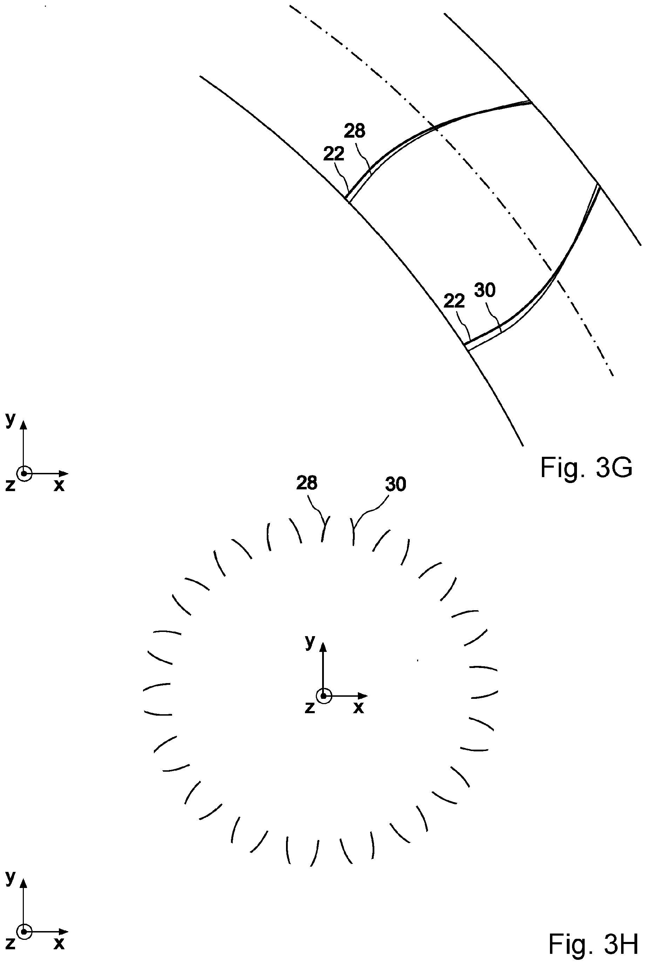

Für jede Flankengruppe 26 erfolgt anschließend eine Modellierung eines Profilsegments 28, 30 jeweils als mathematische nichtlineare Funktion höherer Ordnung, wobei Profilsegmente linker Flanken 10 als Profilsegmente 28 und Profilsegmente rechter Flanken 14 als Profilsegmente 30 bezeichnet werden (Fig. 3G, Fig. 3H). In voranstehend beschriebener Weise können für jede Höhe z die Profilsegmente 28, 30 erstellt werden, um die gemessenen Zahnflanken abzubilden (Schritt (V)).

Alternativ oder ergänzend kann vorgesehen sein, dass die dreidimensional definierten Messpunkte aller Flankengruppen vor dem Filtern in eine zweidimensionale Ebene projiziert werden, wobei die Modellierung von Profilsegmenten aus den Messpunkten in der zweidimensionalen Ebene als zweidimensionale Profilsegmente erfolgt. Durch eine Projektion der Messpunkte auf die zweidimensionale Ebene entlang der Flankenlinie kann entsprechend der taktilen Messung eine Mittelung erfolgen.

Die Bestimmung einer oder mehrerer geometrischer Kenngrößen der Verzahnung anhand der Profilsegmente 28, 30 kann analog zur Auswertung einer taktilen Messung erfolgen und insbesondere mittels einer Auswertesoftware zum Auswerten einer taktilen Messung erfolgen, um die Zahnteilung auf Grundlage der Flankenlinien 8, 12 und andere geometrische Kenngrößen der Verzahnung zu bestimmen (Schritt (VI)).

Alternativ oder ergänzend kann anhand des vorgenannten Verfahrens unmittelbar eine jeweilige Flankenlinie 8, 12 durch Filterung und Modellierung erzeugt werden.

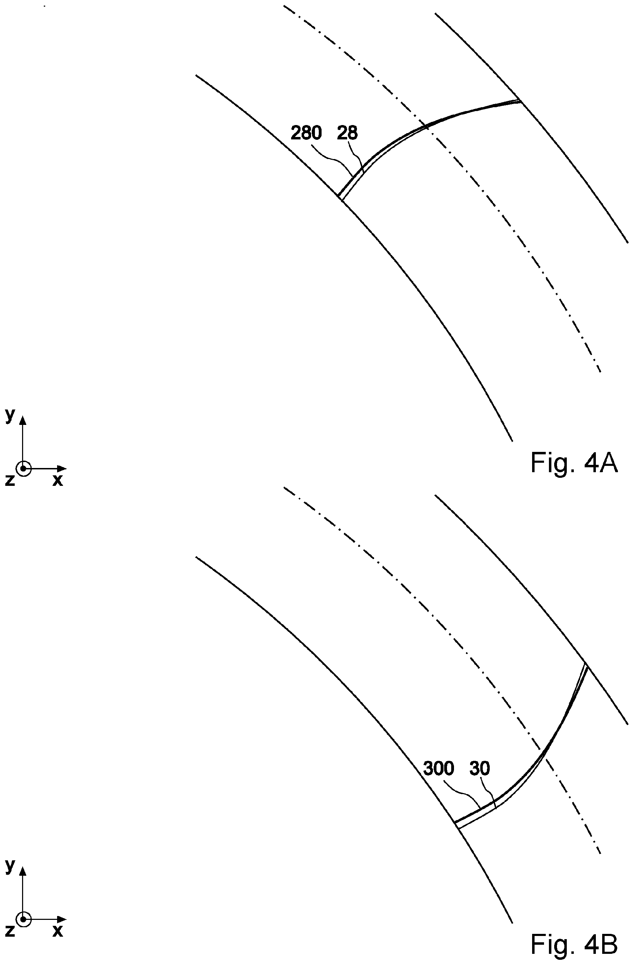

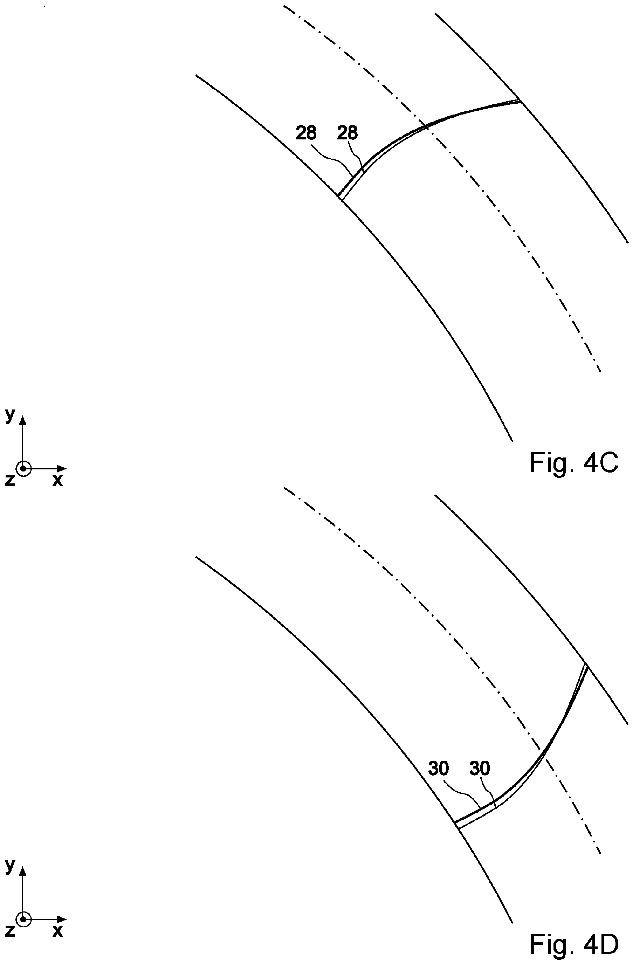

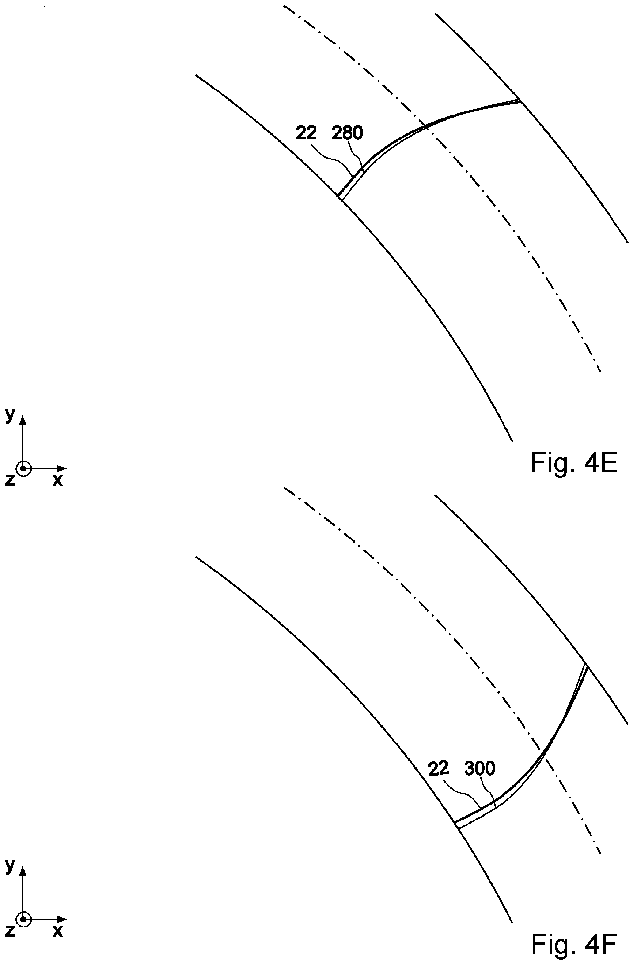

Vor der Auswertung und Bestimmung geometrischer Kenngrößen der Verzahnung kann eine Plausibilitätsprüfung der modellierten Profilsegmente erfolgen, mit einem oder mehreren der folgenden Verfahrensschritte:
- Erstellen eines linken, gemittelten Ausgleichs-Profilsegments 280 aus Profilsegmenten 28 linker Flankengruppen 26 und Überprüfen einer Abweichung mindestens eines Profilsegments 28 einer linken Flankengruppe 26 von dem linken, gemittelten Ausgleichs- Profilsegment 280 (Fig. 4A).
- Erstellen eines rechten, gemittelten Ausgleichs-Profilsegments 300 aus Profilsegmenten 30 rechter Flankengruppen 26 und Überprüfen einer Abweichung mindestens eines Profilsegments 30 einer rechten Flankengruppe 26 von dem rechten, gemittelten Ausgleichs- Profilsegment 300 (Fig. 4B).
- Überprüfen einer Abweichung mindestens eines Profilsegments 28 einer linken Flankengruppe 26 von einem weiteren Profilsegment 28 einer linken Flankengruppe 28 (Fig. 4C).
- Überprüfen einer Abweichung mindestens eines Profilsegments 30 einer rechten Flankengruppe 26 von einem weiteren Profilsegment 30 einer rechten Flankengruppe 26 (Fig. 4D).
- Überprüfen einer Abweichung des linken, gemittelten Ausgleichs-Profilsegments 280 von der vorgegebenen Soll-Geometrie und Überprüfen einer Abweichung des rechten, gemittelten Ausgleichs-Profilsegments 300 von der vorgegebenen Soll-Geometrie (Fig. 4E; Fig. 4F).
- Überprüfen einer Abweichung mindestens eines Profilsegments 28, 30 von der vorgegebenen Soll-Geometrie 22 und/oder von einer Ausgleichs-Geometrie 400, wobei die Ausgleichs-Geometrie 400 aus den Profilsegmenten 28, 20 der Flankengruppen 26 bestimmt worden ist (Fig. 3I). In der schematischen Darstellung der Fig. 3I sind die Soll-Geometrie 22 und die Ausgleichs-Geometrie 400 deckungsgleich eingezeichnet, wobei diese in Realität nicht genau deckungsgleich sind.

### Bezugszeichen

- 2: Bauteil
- 4: Verzahnung
- 6: Zahn
- 8: Flankenlinienabschnitt
- 10: linke Flanke
- 12: Flankenlinienabschnitt
- 14: rechte Flanke
- 16: Messeinrichtung
- 18: optisches Messsystem
- 20: Messpunkte
- 22: Soll-Geometrie
- 24: Messpunkt
- 26: Flankengruppe
- 28: Profilsegment
- 30: Profilsegment
- 280: linkes, gemitteltes Ausgleichs-Profilsegment
- 300: rechtes, gemitteltes Ausgleichs-Profilsegment
- 400: Ausgleichs-Geometrie
- A: Maschinenachse
- P: Oberflächenprofil
- FS: optischer Strahl
- K: Tastkugel
- d_{FS}: Fokusdurchmesser optischer Strahl
- d_{K}: Durchmesser Tastkugel
- TK: Teilkreis
- FK: Fußkreis
- KK: Kopfkreis
- R_{MIN}: Kreis mit minimalem Radius des radialen Filters
- R_{MAX}: Kreis mit maximalem Radius des radialen Filters
- P+: erste Grenze profilspezifischer Filter
- P-: zweite Grenze profilspezifischer Filter
- x: Achse
- y: Achse
- z: Achse

## Patentansprüche

1. Verfahren, mit den Verfahrensschritten:
- Bereitstellen eines Bauteils (2), wobei das Bauteil (2) eine Verzahnung (4) mit einer vorgegebenen Soll-Geometrie (22) aufweist;
- Bereitstellen einer Messeinrichtung (16), wobei die Messeinrichtung (16) ein optisches Messsystem (18) aufweist;
- Messen der Verzahnung (4) des Bauteils (2) mittels des optischen Messsystems (18), wobei Messpunkte (20) erfasst werden;
- Auswertung der Messpunkte (20);
**dadurch gekennzeichnet, dass**
- die Auswertung der Messpunkte (20) zumindest die folgenden Schritte aufweist:
- Gruppierung der Messpunkte (20) zu Flankengruppen (26) durch Filterung;
- Modellierung von Profilsegmenten (28, 30) aus den Messpunkten (20) der Flankengruppen (26), wobei jeder Flankengruppe (26) ein Profilsegment (28, 30) zugeordnet wird;
- Bestimmung einer oder mehrerer geometrischer Kenngrößen der Verzahnung anhand der Profilsegmente (28, 30).

2. Verfahren nach Anspruch 1,
**dadurch gekennzeichnet, dass**
- die Gruppierung der Messpunkte zu Flankengruppen durch Filterung einen oder mehrere der folgenden Verfahrensschritte aufweist:
- Radiale Filterung der Messpunkte, wobei eine Mehrzahl der Messpunkte der Flankengruppen, insbesondere alle Messpunkte der Flankengruppen, zwischen einem vorgegebenen minimalen Radius und einem vorgegebenen maximalen Radius liegen;
- Profilspezifische Filterung der Messpunkte, wobei eine Mehrzahl der Messpunkte der Flankengruppen, insbesondere alle Messpunkte der Flankengruppen, zu der vorgegebenen Soll-Geometrie der Verzahnung jeweils einen minimalen Abstand aufweisen, der einen vorgegebenen Abstand nicht überschreitet;
- Kinematische Filterung der Messpunkte, wobei eine Mehrzahl der Messpunkte der Flankengruppen, insbesondere alle Messpunkte der Flankengruppen, die Bedingung erfüllen, dass zum Zeitpunkt der Erfassung des jeweiligen Messpunkts ein Betrag einer Beschleunigung einer eine Messbewegung ausführenden Maschinenachse der Messeinrichtung kleiner als ein vorgegebener Schwellwert ist;
- Qualitative Filterung der Messpunkte, wobei eine Mehrzahl der Messpunkte der Flankengruppen, insbesondere alle Messpunkte der Flankengruppen, die Bedingung erfüllen, dass während der Abbildung eines jeweiligen Messpunkts eine vorgegebene Belichtungszeit und/oder eine vorgegebene Intensität nicht unterschritten wird.

3. Verfahren nach einem der voranstehenden Ansprüche,
**dadurch gekennzeichnet, dass**
- die Gruppierung der Messpunkte zu Flankengruppen durch Filterung einen oder mehrere der folgenden Prüfschritte aufweist:
- Prüfen, ob die Anzahl der Flankengruppen einer doppelten Zähnezahl der Verzahnung entspricht;
- Prüfen, ob die Anzahl der Messpunkte einer jeweiligen Flankengruppe eine vorgegebene Mindestanzahl überschreitet;
- Prüfen, ob die Messpunkte einer jeweiligen Flankengruppe eine vorgegebene Verteilung aufweisen;
- wobei die Prüfschritte insbesondere vor der Modellierung ausgeführt werden.

4. Verfahren nach einem der voranstehenden Ansprüche,
**dadurch gekennzeichnet, dass**
- die Modellierung von Profilsegmenten aus den Messpunkten der Flankengruppen, wobei jeder Flankengruppe ein Profilsegment zugeordnet ist, einen der folgenden Verfahrensschritte aufweist:
- Modellierung mindestens eines Profilsegments als mathematische nichtlineare Funktion höherer Ordnung oder
- Modellierung mehrerer Profilsegmente jeweils als mathematische nichtlineare Funktion höherer Ordnung oder
- Modellierung aller Profilsegmente jeweils als mathematische nichtlineare Funktion höherer Ordnung.

5. Verfahren nach einem der voranstehenden Ansprüche,
**dadurch gekennzeichnet, dass**
- die Modellierung von Profilsegmenten aus den Messpunkten der Flankengruppen, wobei jeder Flankengruppe ein Profilsegment zugeordnet ist, eine Plausibilitätsprüfung mit einem oder mehreren der folgenden Verfahrensschritte aufweist:
- Erstellen eines linken, gemittelten Ausgleichs-Profilsegments aus Profilsegmenten linker Flankengruppen und Überprüfen einer Abweichung mindestens eines Profilsegments einer linken Flankengruppe von dem linken, gemittelten Ausgleichs-Profilsegment;
- Überprüfen einer Abweichung mindestens eines Profilsegments einer linken Flankengruppe von einem weiteren Profilsegment einer linken Flankengruppe;
- Erstellen eines rechten, gemittelten Ausgleichs-Profilsegments aus Profilsegmenten rechter Flankengruppen und Überprüfen einer Abweichung mindestens eines Profilsegments einer rechten Flankengruppe von dem rechten, gemittelten Ausgleichs-Profilsegment;
- Überprüfen einer Abweichung mindestens eines Profilsegments einer rechten Flankengruppe von einem weiteren Profilsegment einer rechten Flankengruppe;
- Überprüfen einer Abweichung des linken, gemittelten Ausgleichs-Profilsegments von der vorgegebenen Soll-Geometrie;
- Überprüfen einer Abweichung des rechten, gemittelten Ausgleichs-Profilsegments von der vorgegebenen Soll-Geometrie;
- Überprüfen einer Abweichung mindestens eines Profilsegments von der vorgegebenen Soll-Geometrie und/oder von einer Ausgleichs-Geometrie, wobei die Ausgleichs-Geometrie aus den Profilsegmenten der Flankengruppen bestimmt worden ist;
- Überprüfen einer Abweichung eines ersten Profilsegments eines Zahns der Verzahnung einer ersten Messung von einem zweiten Profilsegment desselben Zahns einer zweiten Messung.

6. Verfahren nach Anspruch 5,
**dadurch gekennzeichnet, dass**
- eine Anpassung der Filterung
und/oder
- eine Anpassung eines Messparameters erfolgt,
- falls eine Abweichung einen vorgegebenen Schwellwert überschreitet.

7. Verfahren nach einem der voranstehenden Ansprüche,
**dadurch gekennzeichnet, dass**
- dreidimensionale Messpunkte mindestens einer Flankengruppe, mehrerer Flankengruppen oder aller Flankengruppen in eine zweidimensionale Ebene projiziert werden, insbesondere vor dem Erstellen von Profilsegmenten, wobei die Modellierung von Profilsegmenten aus den Messpunkten insbesondere in der zweidimensionalen Ebene als zweidimensionale Profilsegmente erfolgt;
oder
- ein dreidimensionales Profilsegment einer Flankengruppe, dreidimensionale Profilsegmente mehrerer Flankengruppen oder dreidimensionale Profilsegmente aller Flankengruppen in eine zweidimensionale Ebene projiziert werden.

8. Verfahren nach einem der voranstehenden Ansprüche,
**dadurch gekennzeichnet, dass**
- eine Zahnteilung eine der einen oder mehreren geometrischen Kenngrößen der Verzahnung ist und die Bestimmung der Zahnteilung an einem Teilungsmesskreis erfolgt
und/oder
- eine Teilungsabweichung eine der einen oder mehreren geometrischen Kenngrößen der Verzahnung ist.

9. Verfahren nach einem der voranstehenden Ansprüche,
**dadurch gekennzeichnet, dass**
- das Bauteil während des Erfassens der Messpunkte relativ zu dem optischen Messsystem kontinuierlich bewegt wird
und/oder
- ein Fokusdurchmesser des optischen Messsystems 50 Mikrometer oder weniger beträgt, insbesondere 20 Mikrometer oder weniger beträgt,
und/oder
- die Bestimmung einer oder mehrerer geometrischer Kenngrößen der Verzahnung anhand der Profilsegmente analog zur Auswertung einer taktilen Messung erfolgt und/oder mit einer Auswertesoftware zum Auswerten einer taktilen Messung erfolgt.

10. Vorrichtung,
- mit einer Messeinrichtung, wobei die Messeinrichtung ein optisches Messsystem aufweist,
- mit einer Aufnahme zum Halten eines Bauteils,
- mit einer Steuerungs- und Auswerteeinheit, eingerichtet zur Durchführung eines Verfahrens gemäß einem der Ansprüche 1 - 9.
